# EUROPEAN PATENT SPECIFICATION

(11) **EP 0 409 997 B1**
(45) Date of publication and mention of the grant of the patent: **21.12.1994**
(21) Application number: 90901682.6
(22) Date of filing: 12.01.1990
(51) Int. Cl.: B29D 30/30

(54) **METHOD AND APPARATUS FOR STICKING TIRE FORMING MATERIAL**
VERFAHREN UND VORRICHTUNG ZUM KLEBEN VON REIFENBILDENDEM MATERIAL
PROCEDE ET DISPOSITIF DE COLLAGE D'UN MATERIAU DE FORMAGE DE PNEUS

(30) Priority: 13.01.1989 JP 16720/89
(43) Date of publication of application: 30.01.1991
(73) Proprietor: SUMITOMO RUBBER INDUSTRIES LIMITED, Chuo-ku Kobe-shi Hyogo 651 (JP)
(72) Inventor: YAMAMORI, Shuichi room 202 Daini Kopo Hamashima, Toyota-shi Aichi 471 (JP); KURASHIMA, Sadao 27-67, Nomiyama-cho 3-chome, Aichi 471 (JP); TANIHARA, Itsuo 136-11, Aoki-cho 5-chome, Aichi 470-03 (JP); KUDO, Yasuhiko 16-4, Eiwa Hiratobashi-cho, Aichi 470-03 (JP)
(74) Representative: Stewart, Charles Geoffrey
(86) International application number: PCT/JP90/00030
(87) International publication number: WO 90/08031

(56) References cited:
- GB-A- 1 006 367
- JP-A- 1 180 330
- JP-A- 1 229 618
- JP-A- 6 430 737
- JP-A-57 178 839
- JP-A-57 178 840
- JP-A-61 286 124
- JP-A-63 256 430
- JP-B- 6 059 140
- JP-B- 6 122 619
- US-A- 4 004 961
- PATENT ABSTRACTS OF JAPAN, vol. 6, no. 199 (M-162)[1077], 8th October 1982;& JP-A-57 105 336 (YOKOHAMA GOMU K.K.) 30-06-1982
- PATENT ABSTRACTS OF JAPAN, vol. 24, (M-189)[1169], 29th January 1983;& JP-A-57 178 840 (MITSUBISHI) 04-11-1982

## Description

The present invention relates to a method employed in the building of a green tyre, in which a tyre component such as a side wall, a breaker cushion, a tread or bead apex, is adhered/assembled to and onto a carcass on a tyre building former, and an apparatus used therefor.

In the building of a radial tyre in the form of a 'green' carcass, particularly a tyre having a tread-over-sidewall construction, that is a structure in which in the cross section of the tyre, the edge of the tread layer is located over the top of the side wall layer and stacked on it, a cylindrical carcass is formed first by adhering tyre component materials directly and successively onto a former, and then the side wall material, for example, a co-extruded combined side wall and clincher apex is assembled and adhered onto this carcass. Hitherto, this adhering work was done manually, but it requires a high degree of skill and the resulting quality is apt to be variable because it involves the adhesion of a non-flat material onto a non-flat surface. Furthermore, the variability of the adhering work not only directly influenced the uniformity of the tyre but its nature has tended to impede the automation of these adhering operations.

A method and apparatus according to the preambles of claims 1 and 3 respectively for feeding and winding material to form a green tyre carcass is disclosed in Patent Abstracts of Japan, Vol 6 No 199 (M-162)[1077], 8 October 1992 and JP-A-57105336.

A purpose of the present invention is to solve the problems in the above-mentioned conventional method for adhering a tyre component and to provide a method and an apparatus used therefor which enable the efficient production of a green tyre of consistent uniform quality regardless of the skill or experience of the operator.

Accordingly the present invention provides a method for assembling and adhering tyre components to a carcass utilising a drum shaped former and a component pressing mechanism arranged to act from above the former, comprising applying and adhering the front edge of a tyre component of a material to the carcass, rotating the carcass by a predetermined rotation angle, cutting off the tyre component material to a length corresponding to the sum of the full circumferential length of the carcass and the required length for a joint, rotating the carcass to complete the adhering of the tyre component to the carcass and removing the carcass from the former characterised by putting the carcass on a former, having a circumferential length less than the inside circumferential length of the carcass such that the carcass is supported on the upper part of the circumference of the former and hangs below the lower part, and rotating the former whilst pressing the tyre component against the carcass to adhere it to the carcass by means of the pressing mechanism acting from the above, so that the former is suitable for tyre carcasses of various circumferences.

Further more it is preferable that the method comprises the additional step of pressing the carcass from a sideways direction relative to the former.

The tyre component material has a shape such as for example a continuous belt and is held in a roller-up form by the holder. This tyre component material is payed out and delivered in the required length, and then it is adhered onto the carcass and cut off. In this case, the front edge refers to the forward edge formed first by cutting off, the last edge refers to the backward edge formed by cutting off after the tyre component material is payed out and the length for joint refers to the overlap width of the front edge and the last edge when the cut-off piece of the tyre component material is jointed to an annulus along the outer circumference of the carcass.

In addition, according to the present invention there is provided an apparatus for adhering tyre component material to a carcass, comprising a drum-shaped former, a material feeder for supplying the tyre component material toward the former, a pressing mechanism acting from above the former for pressing the material introduced onto the former to press it on the carcass whilst the former rotates, and a cutter assembly for cutting the tyre component material adhered onto the former to cut it into the prescribed length characterised by a chuck for grasping a front edge of the tyre component material which is supplied from the material feeder to draw it out toward the former and for leading the edge of the tyre component material from above relative to the former to lay it on the carcass on the tyre former, comprising a support plate held by a frame capable of moving freely back and forth relative to the drum-shaped former, a press plate capable of grasping the tyre component material in co-operation with the support plate, a lever enabling the support plate during the back and forth movement to move up and down along a predetermined path with a shaft of the support plate being slidingly in contact with a contour of the lever, and driving means which enable the press plate to move up and down relative to the support plate.

Furthermore it is preferable that the adhering apparatus employs the following construction: a construction in which the material feeder includes a guide for leading the tyre component material, the guide employs a roller conveyor and a pair of spaced transwheels are so inclined that the neighbouring sides of both transwheels are lowered and the other sides of them are elevated, and furthermore, at the lower side ends of the transwheels there are located guide plates to control the position in the width direction of the pair of tyre component materials relative to each other which are passing on the roller conveyor in parallel.

Furthermore, it is preferable that the adhering apparatus employs the following construction: a construction in which the chuck generates a motional locus through an initial ascending motion grasping the front edge of the tyre component material and a forward motion toward the former, and through a subsequent descending motion to the former.

Furthermore it is preferable that the adhering apparatus employs the following construction: a construction in which the pressing mechanism comprises an upper pressing roller which presses the nearly full width of the outside circumferential surface of the former from above, a supplemental pressing roller which presses only right-hand and left-hand areas having a predetermined width of the outside circumferential surface of the former from above, and a pressing-sticking roller for clincher which presses clincher part of the carcass.

Furthermore it is preferable that the adhering apparatus employs the following construction: a construction in which the pressing mechanism has a sideward pressing roller which presses against the outside circumferential surface of the former from a sideward direction relative to the former surface.

Furthermore it is preferable that the adhering apparatus employs the following construction: a construction in which there is provided a sensor detecting the front edge of the tyre component material adhered onto the carcass.

The chuck grasps the front edge of the tyre component material fed by the material feeder and guides it to a position over the former onto which the carcass has been attached in advance, then the front edge is laid onto the carcass. The tyre component material is pressed onto the carcass by the operation of the pressing mechanism and concurrently the former is rotated by a predetermined rotation angle so that the tyre component material is adhered onto the carcass. After that, the cutter assembly is operated and the tyre component material is cut off into a length corresponding to the sum of a full circumferential length of the carcass and a required length for the joint. The former is rotated again and the adhesion of the tyre component material on the full circumference of the carcass is completed and the front edge and the last edge are jointed by pressing and sticking by the pressing mechanism to complete the whole adhesion step.

Furthermore, according to the present invention, there is provided an apparatus for adhering tyre component material, employing a chuck comprising a support plate held by a frame capable of moving freely back and forth relative to the drum-shaped former, a press plate capable of grasping the tyre component material in co-operation with the support plate, a lever enabling the support plate during the back and forth movement to move up and down along a predetermined path with a shaft of the support plate being slidingly in contact with a contour of the lever, and driving means which enable the press plate to move up and down relative to the support plate, said chuck grasping a front edge of the tyre component material fed from a material feeder to lay it onto a carcass on a tyre former from above relative to the former surface.

Further aspects of the present invention will now be described in conjunction with the attached diagrammatic drawings in which:
Figure 1a is an overall front view showing an embodiment of the present invention;
Figure 1b is a side view of a main part of the pressing mechanism showing the operation thereof;
Figure 2a is an explanatory view of the structure of the chuck;
Figure 2b is an explanatory view of the main part of the chuck;
Figure 3a is an explanatory view of the moving part of the chuck;
Figure 3b is a plan view thereof;
Figure 4 is a side view of the chuck;
Figure 5a is a plan view of the guide;
Figure 5b is a side view of the main part of the guide;
Figure 6a is a sectional view of the former;
Figure 6b and Figure 6c are respectively front view and side view of the former showing the position of the joint part; and
Figure 7 is a front view of the cutter assembly.

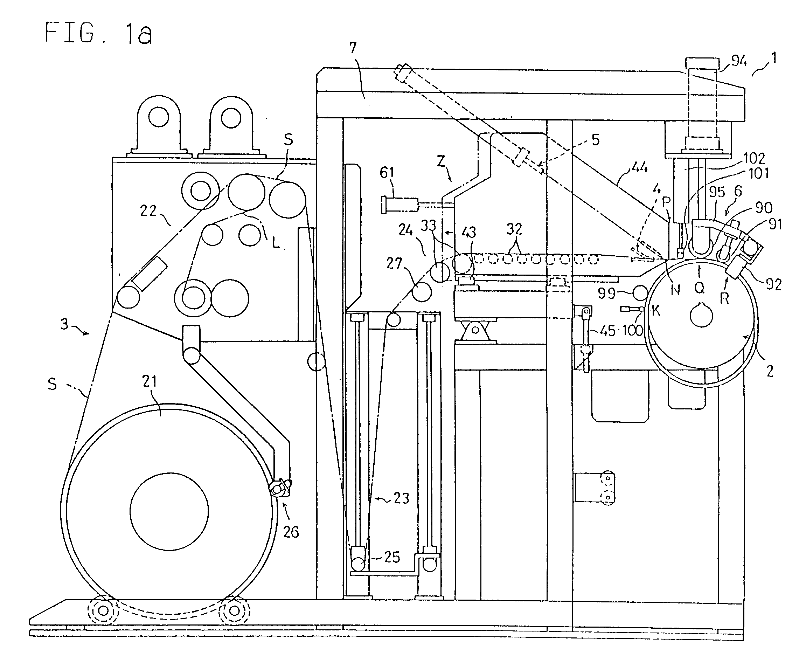

As shown in Figure 1a, the adhering apparatus 1 for tyre components, according to the present invention comprises a drum-shaped former 2, a material feeder 3, a chuck 4, a cutter assembly 5, a pressing mechanism 6. The whole apparatus is set on a machine frame 7.

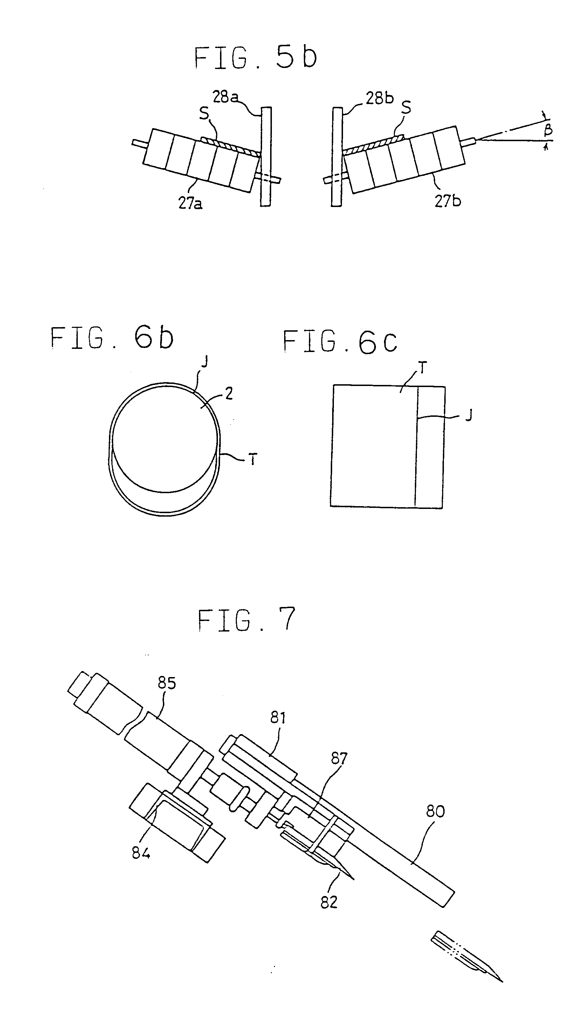

As shown in Figure 6a, the former 2 is divided into a left drum 2a and a right drum 2b, and a bolt device 12 to adjust the width of the former is attached to a flange 11 fixed to a common base shaft 10. Slidable members 14a,14b slidably held by the base shaft 10 are fixed by means of bolts 15,15, to the inward flanges 13a,13b of the left and right drums 2a,2b. Nuts 17a,17b attached to the slidable members 14a,14b are engaged with the bolt device 12. The bolt device 12 has a left-handed thread portion at the left half part and a right-handed thread portion at the right half part. When the bolt 12 is rotated the right and left drums 2a,2b move to become nearer or further apart relative to each other and thus the width of the former can be suitably controlled. In this drawing the numeral 18 represent a key and the numeral 19 represents a fixing bolt. With regard to the former 2, there may be employed a known former having a construction in which the former diameter can be increased and reduced so that the former outside circumferential length can change from being shorter than that of the carcass inside circumferential length to the same as the carcass inside circumferential length and the reverse.

As shown in Figure 1a, the material feeder 3 comprises a holder 21, a winding roll, holding the tyre component material S (hereinafter, the explanation is made with reference to a sidewall as an example) in a wound form, a separator 22 for leading the material S drawn out from the holder and peeling away liner L, a festoon 23 and a guide 24. The festoon 23 has a travelling roller, the up and down movement of which controls the drawn out length of the sidewall S. The holder 21 is equipped with a sensor 26 detecting the shortage of the material S.

Further, another set of the holder 21, the separator 22, the festoon 23 and so on is provided to form respective pairs so as to supply a pair of right and left sidewalls S at a time.

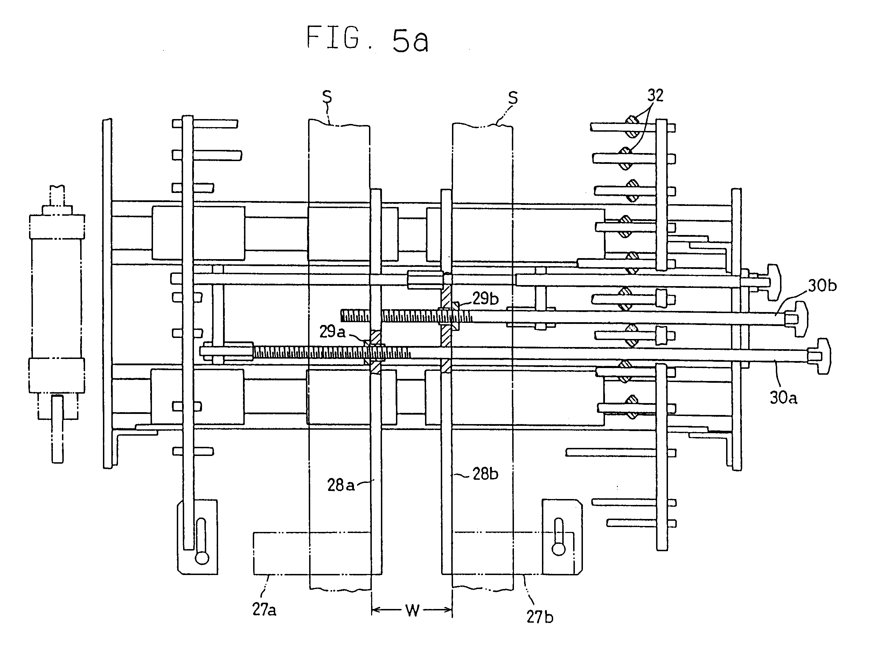

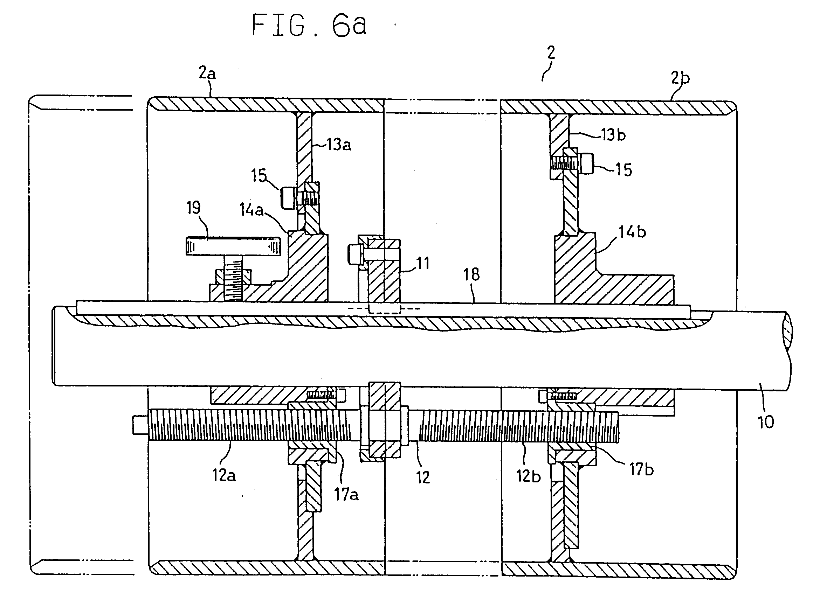

As shown in the Figure 5a to Figure 5b, the guide 24 includes a pair of left and right transwheels 27a,27b located side-by-side having a space therebetween, and guide plates 28a,28b which are disposed adjacent to the opposing neighbouring ends of each of the transwheels 27a,27b. The axes of the transwheels 27a,27b are inclined by an angle β so that the ends near the guide plates 28a,28b are lowered. Thus the locations of the guide plates 28a,28b determine the relative position in the lateral direction of the pair of sidewalls which pass in parallel on the transwheels via a roller conveyor 32, to be described later, on to the carcass at a prespecified separation W. Nuts 29a,29b are attached to the left and right guide plates 28a,28b and screw rods 30a,30b are engaged with the nuts 29a,29b. The rotation of the screw rods 30a,30b provides right and left movement of the guide plates 28a,28b and consequently adjust the position of the guide plates 28a,28b.

A large number of tapered rollers are located on the left and right sides of the downstream area of the transwheels 27a,27b, to transport the sidewalls towards the former. The numeral 33 shown in Figure 1a represents a free roller which synchronises the delivery and take-out with regard to the left and right sidewalls S.

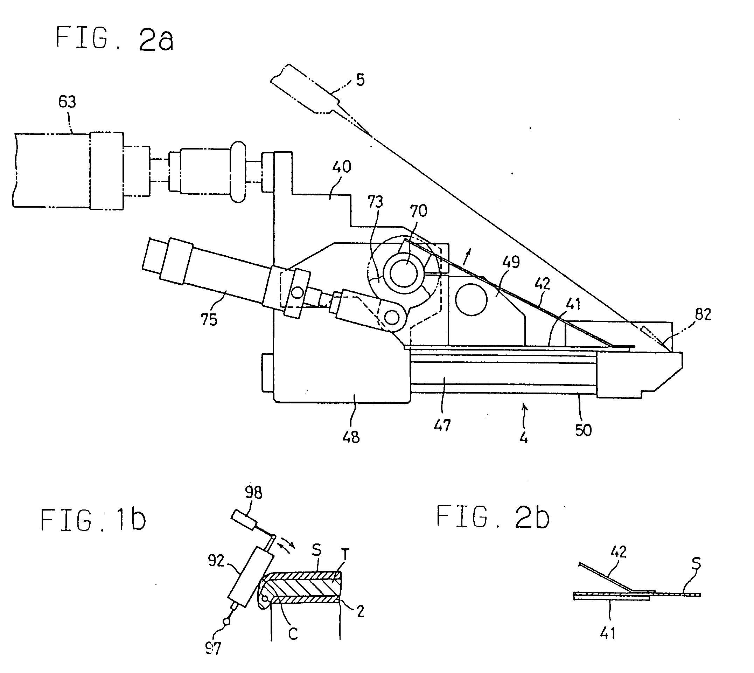

As shown in Figure 2a to Figure 2b, the chuck 4 comprises a support plate 41 and a press plate 42 attached to a frame 40 and mounted on a base plate 44. This is supported slidably by liner guides 43 attached to the machine frame 7 shown in Figure 1a. The height of the base plate 44 can be adjusted by means of a bolt 45. As shown in Figure 2a to Figure 2b, another linear guide 48 is provided on the frame 40 in such a manner that the linear guide 48 can be engaged with a rail 47 arranged on the base plate 44 (refer to Figure 1a), and the frame 40 is supported slidably back and forth along the rail 47. The frame 40 has a cradle 50 against which the cutter abuts when cutting the material. On this cradle 50 the support plate 41 is located. The support plate 41 is equipped with an integral side plate 49.

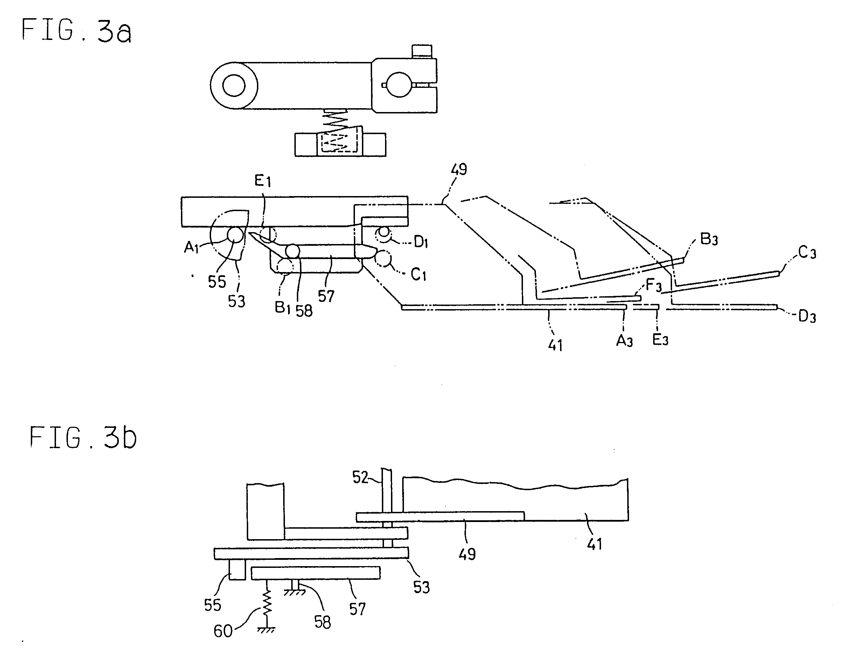

As shown in Figure 3a and Figure 3b, a shaft 52 is attached to the frame 40, and to the shaft 52 there are fixed the side plate 49 of the support plate and an outer plate 53 provided with a shaft 55 projecting therefrom. A dog-legged lever 57 is pivotally supported around a shaft 58 on the base plate 44, so that the previously-mentioned shaft 55 moves along the contour of the lever 57 during the back and forth movement of the chuck 4. In addition, a force is applied on the lever 57 by a spring 60 so as to keep the condition shown in Figure 3a.

The numerals 61 in Figure 1a and 63 in Figure 2a represent cylinders to provide the back and forth movement of the base plate 44 and the frame 40 respectively.

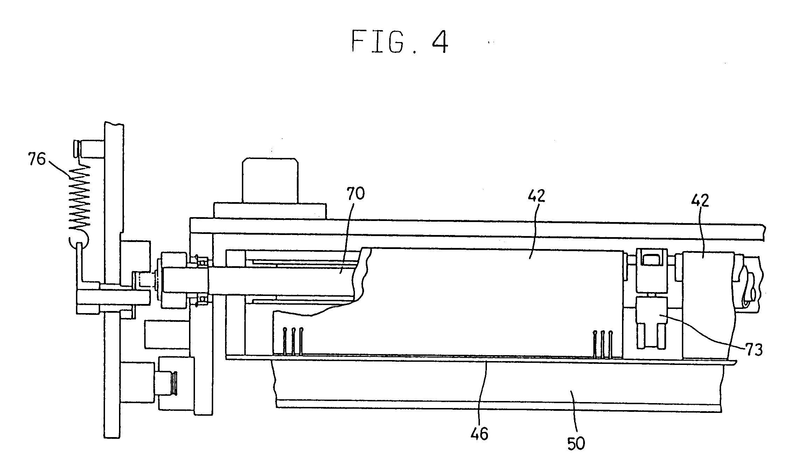

As shown in Figure 2a, the fixed end of the press plate 42 is attached to a shaft 70, and as shown in Figure 4, a rotary joint 73 is provided on the middle portion of the shaft 70. As shown in Figure 2a, a cylinder 75 is connected to the rotary joint 73 so as to enable the press plate 42 to be rotatively moved upward by extension of the cylinder 75, thereby the chuck can be opened. In addition, a force is applied on the press plate 42 by a spring 76 (refer to Figure 4) along the shutting direction (the direction of downward rotation).

As shown in Figure 7, the cutter assembly 5 comprises a flat-plate-shaped cutter 82 attached to the slidable member 81 engaged with the linear guide 80 attached to the base plate 44 (refer to Figure 1a), and a cylinder 85 which is supported by a bracket 84 fixed to the base plate 44 and has a piston rod connected to the slidable member 81. When this cylinder 85 is extended, the cutter 82 advances along a downwardly inclined direction and its edge reaches the upper surface of the cradle 50, as shown in figure 2a. On the upper surface of the cutter 82 there is located a heater 87 which can heat the cutter to a temperature of between 200^{o}C-250^{o}C.

As shown in Figure 1a, the pressing mechanism 6 comprises an upper main pressing roller 90, a pair of left and right supplemental pressing rollers 91, and a pair of left and right pressing-sticking rollers 92, for the clincher, and they are supported by a bracket 95 attached to a piston rod of a cylinder 94 disposed vertically above the former 2. The upper pressing roller 90 has a length almost equal to the full width of the former 2, and it presses against the full width of the former 2 from above relative to the former surface. The supplemental pressing rollers 91, are respectively located on the left-hand and right-hand sides of the outside circumferential surface of the former 2, and each of them presses only against a prescribed width i.e. the full width of the sidewall S. the pressing-sticking roller 92 for the clincher, as shown in Figure 1b, presses diagonally the clincher C of a carcass T located on the side edge of the former 2. The roller 92 is made of urethane or the like and operated by telescopic motion of a cylinder supported by a linear guide engaged with a rail attached to the end of the bracket 95 (refer to Figure 1a). In Figure 1a, on the upstream side relative to the upper pressing roller 90 there is provided a pair of additional pressing rollers 101 for the cutting operation, which are supported by a cylinder 102 and allowed to independently move up and down. As a pressing means in addition to the above-mentioned, a side pressing roller 99 is provided at each side of the incoming path to the former. This pressing roller 99 is supported by the base plate 44 by a spring so as to contact the component and press it radially inwards onto the former 2 when the base plate 44 advances toward the former. Additionally, adjacent to this roller 99, there is located a sensor 100 capable of detecting the front edge of the sidewall S wound around the former 2.

The operation of the adhering apparatus 1 is now explained below. First, the chuck 4 and cutter assembly 5 are retreated to the standby position. The relative spacing W (refer to figure 5a) between the pair of guide plates 28a,28b in the guide 24 of the material feeder 3 is adjusted by means of the screw rods 30a,30b, and subsequently the oblique angle β (refer to Figure 5b) of the pair of transwheels 27a,27b is adjusted to a suitable angle.

A pair of sidewalls S are drawn out respectively from the holders 21 and are led to the chuck 4 through the guide. Thereafter each front edge of them is held by the chuck formed by the support plate 41 and the press plate 42 (refer to Figure 2b). In addition the width of the former 2 is adjusted, in advance, by means of a rotation of the adjusting bolt 12 according to the width of the carcass to be applied on the former (refer to Figure 6a).

The cylindrical carcass which has been formed in advance elsewhere is put on the former 2. Since the outside diameter of the former 2 is smaller than the inside diameter of the carcass on the former 2, the lower part of the carcass T on the former 2 hangs down a little (refer to Figure 6b). As shown in Figures 6b to 6c, the ply joint part J is located in the top area or the bottom area when the carcass T is put on the former.

The base plate 44 is advanced by the operation of the cylinder 61 so that the chuck is located at the feeding position P adjacent to the upper part of the former. The cylinder 94 of the pressing mechanism 6 is operated at the same time as the approach of the base plate 44, and the upper pressing roller 90, the supplemental pressing rollers 91 and the pressing-sticking rollers 92 for the clincher are lowered so as to press the upper part of the carcass T on the former. Additionally, the sideward roller 99 is also advanced by the advance of the base plate 44, and as a result it contacts and presses the carcass T from the sideward direction relative to the former. The former 2 is then rotated clockwise, as in Figure 1, through an angle of 90 degrees and then stopped. By this operation the carcass T is brought into contact with the upper surface of the former 2. Next, the cylinder 94 is operated to lift back the upper roller 90 to the standby position.

The cylinder 63 is operated so that the chuck part (the support plate 41 and the press plate 42 shown in Figure 2b) holding the front edge of the sidewall S is further advanced. During this operation the shaft 55 projecting from the outer plate 53 shown in Figures 3a and 3b moves along the contour of the lever 57 through a route, shown in Figure 3a, A₁ - B₁ - C₁ - D₁ - E₁ in that order keeping in contact with the lever 57. So, corresponding to this movement of the shaft 55, the edge of the support plate 41 moves through a route A₃ - B₃ - C₃ - D₃ - E₃ in that order. As a result, the front edge of the sidewall S held by the chuck part moves generating a particular motional locus comprising a rising path, an advancing path and a falling path, and is then placed onto the carcass on the former. The specific shape of the lever 57, being a cam, enables the movement of the chuck part to become a serial continuous motion, so the movement becomes faster and the mechanism can be simplified compared with a conventional apparatus using a cylinder or the like.

At the same time as the afore-mentioned further advance of the chuck part the cylinder 94 is operated so that the upper pressing roller 90, the supplemental pressing rollers 91 and the pressing-sticking rollers 92 for the clincher are moved down to press the respective front edges of the pair of sidewalls S placed at the position Q on the carcass. Concurrently, the cylinder 75 shown in Figure 2a is extended to rotate the press plate 42 of the chuck part upward against the force of the spring so that the sidewalls are released from restraint and additionally the cylinder 63 is contracted so that the chuck 4 retreats and returns to the standby position.

In Figure 1a, the former 2 begins to rotate, and the pressing-sticking roller 92 for the clincher is advanced by the operation of the cylinder 98 just after the front edge of the sidewall passes the position R where the roller 92 is located. Thus, as shown in Figure 1b the roller 92 presses and sticks the sidewall S onto the bead portion B in the clincher area C.

Then the former 2 is further rotated, and when the front edge of the sidewall comes to the position K, it is detected by the sensor 100. From this position the former 2 is further rotated by an angle corresponding to a given number of pulses set in advance by means of a counter, and then the former 2 is stopped. Thereby, the precise control of the joint length is achieved. At this stage, the length of the sidewall from the front edge to the position N where the sidewall is to be cut (i.e. prespecified dimension) is equal to the sum of the carcass outside circumferential length and the length for the overlap joint.

The cylinder 75 shown in Figure 2a is contracted and then the press plate 42 of the chuck part is lowered by virtue of the force of the spring so as to hold and restrain the sidewall S at a position slightly behind the cut-off position.

The pair of left and right additional pressing rollers 101 for the cutting operation are lowered by the operation of the cylinder 102 shown in Figure 1a so as to press and fix the sidewall which has been strained between the chuck part and the upper pressing roller 90. Concurrently, the cutter 82 is advanced by the operation of the cylinder 85 shown in Figure 7. In this manner both left and right sidewalls are cut into the prespecified length at the position N. After the cutting operation, the cutter 82 is returned along an upwardly inclined direction to the standby position and also the additional pressing roller 101 for the cutting operation is returned upward to the standby position.

The joint of the front and last edges of the sidewall is formed by overlapping those edges, and the rotation of the former 2 is stopped just after the formed joint goes through the pressing of the upper pressing roller 90. Thereafter the former 2 begins to rotate in the reverse direction and this reverse rotation is stopped after the joint part goes through in the reverse direction the pressure region of the upper pressing roller 90. Thereby, the joint part is pressed and stuck firmly enough to prevent separation. With regard to the pressing-sticking roller 92 for the bead shown in Figure 1b, the roller 92 is retracted by the operation of the cylinder 98 before the former 2 begins to rotate in the reverse direction.

The cylinder 94 is operated so that the upper pressing roller 90, the supplemental pressing roller 91, the pressing-sticking roller 92 for the clincher, the additional pressing roller 101 for the cutting operation and the like are lifted and returned to their respective standby positions. Further, the whole base pate 44 is retracted and returned to the standby position Z by the operation of the cylinder 61. At this time, the sideward pressing roller 99 also returns together with the base plate 44 to the standby position.

The present invention is explained herein with reference to an embodiment where the sidewall is adhered onto the carcass, but it should be readily understood that the present invention can be applied to the step in which a breaker cushion, tyre tread or other component is applied. Further, for the sensor 100 for detecting the front edge of the sidewall, a non-contacting sensor such as a photoelectric type sensor, a capacitance type sensor or the like can be used instead of a limit switch. Furthermore, with regard to a pressing roller, a laminate-type roller wherein plural disks are inlaid on the surface of a sponge through which a centre shaft passes can be employed. Similarly, regarding the cutter there can be employed a rotary cutter having edges along its outside circumference the rotation of which provides cutting, instead of a hot knife in the illustrated example. A rotary cutter provides an advantage that cutting can be carried out without heating.

As explained above, the automated method and apparatus for adhering tyre component material according to the present invention, compared with prior skill-dependent manual methods, provides a distinct improvement in productivity.

Additionally, product consistency and tyre uniformity are improved.

## Claims

1. A method for assembling and adhering tyre components to a carcass utilising a drum shaped former (2) and a component pressing mechanism (6) arranged to act from above the former (2), comprising applying and adhering the front edge of a tyre component of a material to the carcass, rotating the carcass by a predetermined rotation angle, cutting off the tyre component material to a length corresponding to the sum of the full circumferential length of the carcass and the required length for a joint, rotating the carcass to complete the adhering of the tyre component to the carcass and removing the carcass from the former (2) characterised by putting the carcass on a former (2), having circumferential a length less than the inside circumferential length of the carcass such that the carcass is supported on the upper part of the circumference of the former (2) and hangs below the lower part, and rotating the former (2) whilst pressing the tyre component against the carcass to adhere it to the carcass by means of the pressing mechanism (6) acting from the above, so that the former is suitable for tyre carcasses of various circumferences.

2. A method according to claim 1 characterised in that the tyre component is additionally pressed from a sideways direction relative to the former.

3. An apparatus for adhering tyre component material to a carcass, comprising a drum-shaped former (2), a material feeder (3) for supplying the tyre component material toward the former (2), a pressing mechanism (6) acting from above the former (2) for pressing the material introduced onto the former to press it on the carcass whilst the former rotates, and a cutter assembly (5) for cutting the tyre component material adhered onto the former (2) to cut it into the prescribed length characterised by a chuck (4) for grasping a front edge of the tyre component material which is supplied from the material feeder (3) to draw it out toward the former (2) and for leading the edge of the tyre component material from above relative to the former (2) to lay it on the carcass on the tyre former, comprising a support plate (41) held by a frame (40) capable of moving freely back and forth relative to the drum-shaped former (2), a press plate (42) capable of grasping the tyre component material in co-operation with the support plate (41), a lever (57) enabling the support plate (41) during the back and forth movement to move up and down along a predetermined path with a shaft (55) of the support plate (41) being slidingly in contact with a contour of the lever (57), and driving means which enable the press plate (42) to move up and down relative to the support plate (41).

4. The apparatus of Claim 3 characterized in that the material feeder (3) includes a guide (24) for leading the tyre component material, the guide comprising a roller conveyor and a pair of spaced transwheels (27A,27B) located side-by-side adjacent to an upstream end of the roller conveyor, and the pair of transwheels (27a,27b) are so inclined that the neighbouring sides of both transwheels (27a,27b) are lowered and the other sides of them are elevated, and furthermore, at the lower side ends of the transwheels (27a,27b) there are located guide plates (28a,28b) to control the position in the width direction of the pair of tyre component materials relative to each other which are passing on the roller conveyor in parallel.

5. The apparatus of Claim 3 or 4 characterized in that the chuck (4) generates a motional locus through an initial ascending motion grasping the front edge of the tyre component material and a forward motion toward the former (2), and through a subsequent descending motion to the former (2).

6. The apparatus of Claim 3, 4 or 5 characterized in that the pressing mechanism (6) comprises an upper pressing roller (90) which presses the nearly full width of the outside circumferential surface of the former (2) from above, a supplemental pressing roller (91) which presses only right-hand and left-hand areas having a predetermined width of the outside circumferential surface of the former (2) from above, and a pressing-sticking roller (92) for the clincher which presses the clincher part of the carcass.

7. The apparatus of Claim 3, 4, 5 or 6, characterized in that the pressing mechanism (6) has a side pressing roller (99) which presses radially inwards of the former.

8. The apparatus of Claim 3, 4, 5, 6 or 7, characterised in that there is provided a sensor (100) detecting the front edge of the tyre component material adhered onto the carcass.

## Patentansprüche

1. Ein Verfahren zum Zusammenfügen und Befestigen von Reifenkomponenten an einer Karkasse unter Verwendung einer trommelförmigen Aufbautrommel (2) und eines Komponenten-Preßmechanismus (6), der angeordnet ist, um von oben auf die Aufbautrommel (2) zu wirken, das umfaßt ein Aufbringen und Anhaften der vorderen Kante einer Reifenkomponente aus einem Material an der Karkasse, ein Drehen der Karkasse um einen vorgegebenen Drehwinkel, ein Abschneiden des Reifenkomponentenmaterials auf eine Länge, die der Summe der vollen Umfangslänge der Karkasse und der erforderlichen Länge für eine Verbindung entspricht, eine Drehung der Karkasse, um das Anhaften der Reifenkomponente an der Karkasse zu beenden, und ein Entfernen der Karkasse von der Aufbautrommel (2),
**gekennzeichnet durch**
ein Aufbringen der Karkasse auf eine Aufbautrommel (2), die in Umfangsrichtung eine Länge hat, die kleiner ist als die innere Umfangslänge der Karkasse, so daß die Karkasse auf dem oberen Teil des Umfangs der Aufbautrommel (2) getragen wird und unterhalb des unteren Teils hängt, und eine Drehung der Aufbautrommel (2), während die Reifenkomponente gegen die Karkasse gepreßt wird, um sie an der Karkasse mittels des Preßmechanismus (6), der von oben wirkt, zu befestigen, so daß die Aufbautrommel für Reifenkarkassen unterschiedlicher Umfangslängen geeignet ist.

2. Ein Verfahren nach Anspruch 1,
dadurch **gekennzeichnet,**
daß die Reifenkomponente zusätzlich von einer seitlichen Richtung gegen die Aufbautrommel gedrückt wird.

3. Eine Vorrichtung zum Anhaften von Reifenkomponentenmaterial an einer Karkasse, mit einer trommelförmigen Aufbautrommel (2), einer Materialzuführvorrichtung (3) zum Zuführen des Reifenkomponentenmaterials zu der Aufbautrommel (2), einem Preßmechanismus (6), der von oben her auf die Aufbautrommel (2) wirkt, um das zugeführte Material auf die Aufbautrommel zu pressen und es auf die Karkasse zu pressen, während sich die Aufbautrommel dreht, und einer Schneidvorrichtungsanordnung (5) zum Schneiden des Reifenkomponentenmaterials, das an der Aufbautrommel (2) haftet, um es in die vorgeschriebene Länge zu schneiden,
**gekennzeichnet durch**
ein Spannfutter (4) zum Greifen einer vorderen Kante des Reifenkomponentenmaterials, das von der Materialzuführvorrichtung (3) zugeführt wird, um es in Richtung der Aufbautrommel (2) abzuziehen und um die Kante des Reifenkomponentenmaterials von oben relativ zu der Aufbautrommel zuzuführen und es auf die Karkasse auf der Reifenaufbautrommel zu legen, mit einer Trägerplatte (41), die durch einen Rahmen (40) gehalten ist, die in der Lage ist, sich frei gegenüber der trommelförmigen Aufbautrommel (2) hin- und herzubewegen, einer Preßplatte (42), die in der Lage ist, das Reifenkomponentenmaterial in Zusammenwirkung mit der Trägerplatte (41) zu greifen, einem Hebel (57), der es der Trägerplatte (41) ermöglicht, sich während der Hin- und Herbewegung entlang eines vorgegebenen Weges auf und ab zu bewegen, wobei eine Achse (55) der Trägerplatte (41) verschiebbar in Kontakt mit einer Kontur des Hebels (57) liegt, und Antriebsmitteln, die es ermöglichen, daß die Preßplatte (42) sich relativ zu der Trägerplatte (41) nach oben und unten bewegt.

4. Die Vorrichtung nach Anspruch 3,
dadurch **gekennzeichnet,**
daß die Materialzuführeinrichtung (3) eine Führung (24) aufweist, um das Reifenkomponentenmaterial zu führen, wobei die Führung einen Walzenförderer und ein Paar von beabstandeten Übertragungsrädern (27A,27B), die Seite an Seite neben einem stromaufwärtigen Ende des Walzenförderers angeordnet sind, aufweist, und das Paar von Übertragungsrädern (27A,27B) so geneigt ist, daß die benachbarten Seiten beider Übertragungsräder (27A,27B) abgesenkt werden und die anderen Seiten von ihnen angehoben werden, und daß weiterhin an den Enden der Übertragungsräder (27A,27B) an der niedrigeren Seite Führungsplatten (28A, 28B) vorgesehen sind und die Position in der Breitenrichtung des Paares von Reifenkomponentenmaterial, die den Walzenförderer parallel zueinander durchlaufen, relativ zueinander zu steuern.

5. Die Vorrichtung nach Anspruch 3 oder 4,
dadurch **gekennzeichnet,**
daß das Spannfutter (4) eine Bewegungskurve durch eine anfängliche ansteigende Bewegung, während der die vordere Kante des Reifenkomponentenmaterials gegriffen wird, und eine vorwärts gerichtete Bewegung in Richtung der Aufbautrommel (2) und durch eine anschließende abfallende Bewegung in Richtung der Aufbautrommel (2), erzeugt.

6. Die Vorrichtung nach Anspruch 3, 4 oder 5,
dadurch **gekennzeichnet,**
daß der Preßmechanismus (6) eine obere Preßwalze (90), die die nahezu volle Breite der äußeren Umfangsfläche der Aufbautrommel (2) von oben her preßt, eine zusätzliche Preßwalze (91), die nur rechts oder links liegende Bereiche, die eine vorgegebene Breite haben, von der äußeren Umfangsfläche der Aufbautrommel (2) von oben her preßt, und eine Preß-Klebe-Walze (92) für die Wulstdecke, die den Wulstdeckenteil der Karkasse preßt, aufweist.

7. Die Vorrichtung nach Anspruch 3, 4, 5 oder 6,
dadurch **gekennzeichnet,**
daß der Preßmechanismus (6) eine seitliche Preßwalze (99) hat, die radial zur Innenseite der Aufbautrommel preßt.

8. Die Vorrichtung nach Anspruch 3, 4, 5, 6 oder 7,
dadurch **gekennzeichnet,**
daß ein Sensor (100) vorgesehen ist, der die vordere Kante des Reifenkomponentenmaterials, das an der Karkasse haftet, erfaßt.

## Revendications

1. Procédé d'assemblage et de collage d'un élément d'un pneumatique sur une carcasse à l'aide d'un organe formateur (2) ayant la configuration d'un tambour et d'un mécanisme (6) de pressage d'élément, destiné à agir par-dessus l'organe formateur (2), le procédé comprenant l'application et le collage du bord avant d'un élément de pneumatique formé d'un matériau sur la carcasse, l'entraînement en rotation de la carcasse d'un angle prédéterminé de rotation, la découpe du matériau de l'élément de pneumatique à une longueur correspondant à la somme de la longueur circonférentielle totale de la carcasse et de la longueur que doit avoir un joint, la rotation de la carcasse afin que le collage de l'élément de pneumatique sur la carcasse soit terminé et l'extraction de la carcasse de l'organe formateur (2), caractérisé par la mise de la carcasse sur un organe formateur (2) ayant une longueur circonférentielle inférieure à la longueur circonférentielle interne de la carcasse afin que la carcasse soit supportée à la partie supérieure de la circonférence de l'organe formateur (2) et soit suspendue sous la partie inférieure, et l'entraînement en rotation de l'organe formateur (2) avec application d'une pression à l'élément de pneumatique contre la carcasse afin qu'il soit collé à la carcasse par le mécanisme (6) de pressage qui agit par-dessus, si bien que l'organe formateur peut être utilisé pour des carcasses de pneumatique dont les circonférences sont différentes.

2. Procédé selon la revendication 1, caractérisé en ce que l'élément de pneumatique est en outre pressé en direction latérale par rapport à l'organe formateur.

3. Appareil de collage d'un matériau d'élément de pneumatique sur une carcasse, comprenant un organe formateur (2) ayant la configuration d'un tambour, un organe (3) d'alimentation en matériau destiné à transmettre le matériau de l'éléments de pneumatique vers l'organe formateur (2), un mécanisme de pressage (6) agissant par-dessus sur l'organe formateur (2) afin qu'il exerce une pression sur le matériau introduit sur l'organe formateur et le repousse contre la carcasse alors que l'organe formateur tourne, et un ensemble (5) à organe de coupe du matériau d'élément de pneumatique collé sur l'organe formateur (2) afin qu'il soit coupé à une longueur prédéterminée, caractérisé par un mandrin (4) destiné à saisir un bord avant du matériau de l'élément de pneumatique qui est transmis par l'organe (3) d'alimentation en matériau afin qu'il soit tiré vers l'organe formateur (2) et que le bord du matériau de l'élément de pneumatique soit conduit de la partie supérieure vers l'organe formateur (2) et soit placé sur la carcasse de l'organe formateur du pneumatique, l'appareil comprenant une plaque de support (41) portée par un châssis (40) qui peut se déplacer librement dans la direction avant-arrière par rapport à l'organe formateur (2) ayant la configuration d'un tambour, une plaque (42) de pressage qui peut saisir le matériau de l'élément de pneumatique en coopération avec la plaque de support (41), un levier (57) permettant le déplacement vertical de la plaque de support (41) pendant son déplacement alternatif dans la direction avant-arrière le long d'un trajet prédéterminé, un arbre (55) de la plaque de support (41) coulissant au contact du profil du levier (57), et un dispositif d'entraînement qui permet à la plaque (42) de pressage de se déplacer verticalement par rapport à la plaque de support (41).

4. Appareil selon la revendication 3, caractérisé en ce que l'organe (3) d'alimentation en matériau comprend un guide (24) destiné à conduire le matériau de l'élément du pneumatique, le guide comprenant un transporteur à rouleaux et deux roues transversales espacées (27a, 27b) placées côte à côte près d'une extrémité amont du transporteur à rouleaux, les deux roues transversales (27a, 27b) ayant une inclinaison telle que les côtés voisins des deux roues transversales (27a, 27b) sont abaissés et les autres côtés sont soulevés, et en outre, aux extrémités latérales inférieures des roues transversales (27a, 27b), des plaques de guidage (28a, 28b) sont disposées afin qu'elles règlent la position de la paire d'éléments du matériau du pneumatique dans la direction de la largeur l'une par rapport à l'autre lorsque les élément du matériau passent parallèlement sur le transporteur à rouleaux.

5. Appareil selon la revendication 3 ou 4, caractérisé en ce que le mandrin (4) donne un lieu de déplacement correspondant à un mouvement initial ascendant de saisie du bord avant du matériau de l'élément de pneumatique et à un mouvement vers l'avant, vers l'organe formateur (2), puis à un mouvement descendant vers l'organe formateur (2).

6. Appareil selon la revendication 3, 4 ou 5, caractérisé en ce que le mécanisme (6) de pressage comporte un rouleau supérieur (90) de pressage qui exerce une pression par le haut sur pratiquement toute la largeur de la surface circonférentielle externe de l'organe formateur (2), un rouleau supplémentaire (91) de pressage qui ne repousse que les régions droite et gauche de largeur prédéterminée de la surface circonférentielle externe de l'organe formateur (2), par le haut, et un rouleau (92) de pressage et de fixation de bourrage qui repousse la partie de bourrage de la carcasse.

7. Appareil selon la revendication 3, 4, 5 ou 6, caractérisé en ce que le mécanisme de pressage (6) possède un rouleau (99) de pressage latéral qui exerce une pression radiale vers l'intérieur de l'organe formateur.

8. Appareil selon la revendication 3, 4, 5, 6 ou 7, caractérisé en ce qu'il comporte un capteur (100) qui détecte le bord avant du matériau de l'élément de pneumatique collé sur la carcasse.
